# EUROPEAN PATENT SPECIFICATION

(11) **EP 3 685 084 B1**
(45) Date of publication and mention of the grant of the patent: **13.07.2022**
(21) Application number: 18769222.3
(22) Date of filing: 20.09.2018
(51) Int. Cl.: F16L 5/02, F16L 5/10

(54) **SYSTEM FOR SEALING IN AN OPENING A SPACE AROUND A PIPE**
SYSTEM ZUM ABDICHTEN IN EINER ÖFFNUNG EINES RAUMES UM EIN ROHR
SYSTÈME D'ÉTANCHÉITÉ DANS UNE OUVERTURE D'UN ESPACE AUTOUR D'UN TUBE

(30) Priority: 20.09.2017 NL 2019585
(43) Date of publication of application: 29.07.2020
(73) Proprietor: Beele Engineering B.V., 7122 NZ Aalten (NL)
(72) Inventor: BEELE, Johannes Alfred, 7122 NZ Aalten (NL)
(74) Representative: Hoffmann Eitle
(86) International application number: PCT/EP2018/075530
(87) International publication number: WO 2019/057848

(56) References cited:
- EP-A1- 2 418 410
- WO-A1-2007/028443

## Description

### Introduction

The invention relates to a system for sealing in an opening a space around a pipe.

Constructions in both onshore and offshore technology (including vessels) often comprise partitions for providing compartments. A pipe or cable may extend through the partition from one compartment into another. For this purpose, the partition contains an opening. The opening, i.e. the space around the pipe (or cable), needs to be sealed to avoid undesired transport of physical phenomena through the opening. Examples of undesired phenomena are the spread of fire, water, smoke, sound etc.

Usually, the opening is provided with or by a conduit and the pipe or cable is ducted through that conduit. Both the opening and the space around the pipe or cable are then, in a perfect world, well-defined. An opening provided by a conduit may be hole formed in, for instance, a concrete wall. An opening provided with a conduit may be a conduit having a flange and bolted or welded to a surrounding of a through-opening in a metal plate-shaped construction element.

After ducting a pipe through the conduit the remaining space is sealed off by insertion of a sealing device, such as a rubber plug having suitable dimensions for sealing that particular annular space. The sealing device is often a multi-plug, i.e. formed by two or more segments. Examples of such a plug are disclosed in EP 1634006, EP 1902241 and EP 2005051. Such plugs are usually made of high quality rubber, preferably silicon based. Such a rubber may have a hardness Shore A of around 72°. These plugs are usually designed to be inserted manually, to avoid the need for additional tools for insertion and tightening. Often the plug and/or the entrance of the pipe is prior to insertion generously provided with a lubricant which makes the insertion process easier. Once the plug has been inserted, it may sometimes take up to 10 bar to again force the plug out of the conduit from the end of the conduit in which it was inserted.

### Background on the invention

Given the conflicting requirements of being easily installable and difficulty removable, it is impressive that a plug manually inserted can sustain such a high pressure. However, it has turned out that for a lightweight workman burdened with the task of inserting these plugs, it sometimes requires too much effort and/or is too time-consuming to press the plug into the conduit.

In the light of this observation, efforts have been made to design conduit inlets which should facilitate insertion of this type of plugs.

EP 2418410 provides a pipe inlet having a smooth inlet end for receiving a sealing device. In that scenario, the plug does not have to be forced along an irregularly formed end of the conduit, but instead will be forced along the smooth inlet end of the conduit. Consequently, the plug has a much higher chance of keeping its outer surface undamaged, favouring maintenance of the sealing integrity. The inlet end of the conduit is further provided with an inner surface which is smooth compared to an outer surface of the inlet end. Such a smooth inner surface is said to facilitate the insertion of the sealing device not only in that the insertion can occur in a relatively fast way, but also in a way that the outer surface of the sealing device remains undamaged. The rim of the conduit is rounded off at an inside of the rim. This is said to ensure that the rim offers self-centering when the sealing device is inserted in the pipe inlet. Furthermore, the rim has also no sharp edges which could somehow form an undesired imprint on the sealing device. The sealing device will therefore remain free from irregularities which could adversely affect the sealing integrity. Such a conduit inlet works satisfactorily as compared to for instance a conduit inlet which is formed by a pipe that has been sawn to its desired length, in that the inner plug is during insertion not damaged by burrs and/or other irregularities formed at the rim of the conduit. However, the actual efforts which need to be provided by a workman burdened with the task of inserting these plugs is still considerable.

### Object of the invention

There remains a desire to provide a system for sealing in an opening a space around a pipe that is more easily applicable, also by a relatively lightweight workman.

### Summary of the invention

The invention provides a system for sealing in an opening space around a pipe. The system comprises: a conduit for forming the opening or for sealingly placing in or against the opening, and for ducting the pipe; and a sealing plug for insertion in the conduit around the pipe. The conduit has an inner cylindrical wall defining an inner diameter. The sealing plug is provided with a number of outer ribs spaced apart in an insertion direction of the plug for realizing, in inserted condition, annular contact planes between the plug and the inner cylindrical wall of the conduit. In uninserted condition of the plug, each of the outer ribs extends up to an outer diameter beyond a nominal plug diameter. The nominal plug diameter corresponds to the inner diameter of the conduit for which the plug is designed. Each rib has an annular contact surface with a contact length for providing in inserted condition a sealing length in insertion direction of the respective annular contact plane. The conduit further has at least one end for insertion of the sealing plug. That at least one end is provided with a slanted section for facilitating insertion of the plug. The slanted section and each rib are such that during movement of the sealing plug in insertion direction for each rib in undeformed condition of the plug contact is first established between the slanted section and a trailing end of the contact length of the respective annular contact surface before contact is also established between the slanted section and a leading end of the contact length. The slanted section consists of a first slanted section having the shape of a truncated cone and a second slanted section having the shape of a truncated cone, each cone having an imaginary axis that coincides with the imaginary axis of the conduit, the first slanted section being closer to the top section than the second slanted section, the angle included by the first slanted section and the imaginary axis being larger than the angle included by the second section and the imaginary axis. Advantageously, the leading end of the length of the contact surface can almost effortlessly be inserted in the conduit before insertion coincides with encountering a resistance against further insertion. This means that over a significant length of the plug insertion of the plug can occur without experiencing resistance so that over such a length the insertion can occur fast, and gain momentum. Once the resistance is felt, it will, due to the momentum gained, be easier to overcome that resistance and further insert the plug. This facilitates insertion of the plug by a relatively lightweight workman. Also advantageously, the angles where the inner cylindrical wall and the second slanted section meet, as well as where the first slanted section and the second slanted section meet, as well as where the first slanted section has its most outer diameter, can be less "sharp", as compared to a geometry in which only one slanted section is present. The leverage-type of situation described above can also be achieved at the point where the first slanted section and the second slanted section meet. Having only these two slanted sections reduces the number of machining steps for manufacturing such an embodiment.

In an embodiment of a system according to the invention, the slanted section extends over a length such that during insertion contact is established between the slanted section and a predominant length of the contact length of the respective annular contact surface.

The sealing plug, oversized by the outer diameter of the ribs, can advantageously during insertion more easily be forced into the conduit which has a diameter that is smaller than the outer diameter of the ribs. This is because on pressing the plug in insertion direction, the rib, particularly the annular contact surface thereof, is pressed against the slanted section of the conduit and experiences radially inwardly directed forces. When, as provided, at least a predominant length of the contact length of the respective annular contact surface is addressed, the strength of the radial force exerted on the respective rib does not need to be too high. This, in turn, allows the angle included by the slanted section and an imaginary axis of the conduit to be small. That also results in relatively little resistance against insertion of the plug, so that insertion can also for this reason be easy for a relatively lightweight workman.

In an embodiment of a system according to the invention, the contact length of each annular contact surface is such that at stages during insertion of the plug the annular contact surface of one of the ribs is partly outside the conduit and partly in contact with the inner cylindrical wall. Thus, although a predominant length of the contact length of the respective annular contact surfaces is during insertion in contact with the slanted section, the slanted section only extends over a length which is smaller than the contact length of the respective annular contact surface. The length of the slanted section is thus limited. Clearly, at most, one outer rib at a time will need to be pressed along the slanted section. As only one rib experiences the resistance due to the slanted section, efforts needed for inserting the sealing plug in the conduit are limited. In addition to this, it is advantageous that the conduit can be relatively short, as the slanted section can be relatively short. Further, particularly in a case where the sealing plug has an outer flange which after insertion abuts the rim of the conduit, the distance between that outer flange and the nearest outer rib can be relatively short, ensuring that a significant number of outer ribs can be available on the plug for securing the sealing integrity, without having to make the plug (and thus also the conduit) too long.

In an embodiment of a system according to the invention, a plug-free distance is present between each pair of annular contact surfaces, the plug-free distance being longer than the contact length. A plug-free distance is a distance in axial direction between outer ribs where no plug material is present. Advantageously, during insertion there will be a number of stages during which resistance against further insertion of the plug is relatively low as during those stages no surplus-part will need to be deformed up to the point that the outer diameter and a nominal plug diameter coincide. Resistance against further insertion is during those stages only the result of friction at the annular contact planes between the plug and the inner cylindrical wall of the conduit (and at contact planes between the plug and the pipe).

These stages of relatively low resistance allow for gaining speed of insertion. More momentum will then be available for inserting the next outer rib of the sealing plug.

In an embodiment of a system according to the invention, the plug-free distance is about twice the contact length. Advantageously, even more momentum can be gained so that the next outer rib can even more easily be inserted.

In an embodiment of a system according to the invention, the outer diameter of a number of the ribs is slightly larger than the diameter defined by the most outer part of the slanted section. This provides for flexing of the outer rib at a very early stage of inserting up to a point that the respective outer rib passes the slanted section. Particularly when the outer rib is in its moving in insertion direction for a short period only resisted by the most outer part of the slanted section, a leverage-type of situation ensures that the outer rib flexes around a pivotal point. When immediately after that it slides in the flexed position along the slanted section, the slanted section can further exert a reactive inwardly directed force on the outer rib (which is already in the flexed position) so that the rib can more easily be pressed further radially inwardly.

In an embodiment of a system according to the invention, the first slanted section extends over a quarter or less of the total length in insertion direction of the first and second slanted section. In an embodiment of a system according to the invention, one of the ribs is a run-in outer rib for insertion thereof before any of the other ribs is inserted. The run-in outer rib is more easily insertable than any of the other ribs. This allows for a relatively simple initial positioning of the sealing plug in the space that needs to be sealed. During this initial positioning of the sealing plug, the workman may need one hand for guiding the plug into the annular space and pushing with another hand the plug inwardly into the conduit. After its initial insertion the plug is still for the vast majority sticking out of the conduit but already tightly held by the conduit so that both hands of a worker can be free for pressing the plug in the insertion direction. This facilitates insertion of the sealing plug by a relatively lightweight workman.

In an embodiment of a system according to the invention, the run-in outer rib has an outer diameter which is smaller than the outer diameter of the other ribs. This allows for a very straightforward way of making the run-in outer rib more easily insertable, for instance, without having to change the nature of the material of which the run-in outer rib is made.

In an embodiment of a system according to the invention, the outer diameter of the run-in rib is smaller than the outer diameter of the first slanted section. Advantageously, the run-in rib can more freely and relatively deeply be inserted in the annular space, facilitating the initial positioning of the sealing plug.

In an embodiment of a system according to the invention, each annular contact surface includes in uninserted condition an angle with an imaginary axis of the sealing plug which is larger than the angle included by a predominant part of the slanted section and an imaginary axis of the conduit. This allows for insertion up to a certain point without having to overcome friction between the slanted section and the annular contact surface. This limits the initial work that needs to be carried out for forcing the outer ribs in a position from which it can be fully pushed into the conduit. This also ensures that a relatively lightweight workman can more easily carry out a task of inserting the sealing plugs.

In an embodiment of a system according to the invention, the contact surface of the run-in rib includes in uninserted condition an angle with an imaginary axis of the sealing plug which is larger than the angle included by a predominant part of the slanted section on an imaginary axis of the conduit. Advantageously, the run-in rib can easily be inserted, facilitating initial positioning of the plug before further insertion.

The invention will further be explained with the aid of a drawing in which:
Fig. 1 shows an example of a system for sealing in an opening a space around a pipe;
Fig. 2 shows in perspective one half of a sealing plug that may be used in a system in accordance with the invention for sealing in an opening a space around a pipe;
Fig. 3 shows another example of a system for sealing in an opening a space around a pipe;
Fig. 4 shows in perspective one segmental part of a sealing plug that may be used in a system in accordance with the invention for sealing in an opening a space around a pipe;
Fig. 4a shows in perspective an example of a sealing plug that may be used in a system in accordance with the invention for sealing in an opening a space around a pipe;
Fig. 5 shows in cross section an example of a conduit that may be used in a system in accordance with the invention for sealing in an opening a space around a pipe;
Fig. 6 shows in cross section an example of another conduit that may be used in a system in accordance with the invention for sealing in an opening a space around a pipe;
Fig. 7 shows in cross section yet another example of a conduit that may be used in a system in accordance with the invention for sealing in an opening a space around a pipe;
Fig. 8 shows schematically in more detail a view of an inner part of a segmental part of a sealing plug that may be used in a system according to the invention;
Fig. 9 shows in more detail in cross section an example of a sealing plug that may be used in a system according to the invention;
Fig. 10 shows in cross section a detailed example of a part of a sealing plug (in Fig. 9 encircled by circle B) of a sealing plug that may be used in a system according to the invention;
Fig. 11 shows in cross section in more detail a part of a sealing plug, the part in Fig. 9 encircled by circle C, that may be used in a system according to the invention;
Fig. 12 in cross section a part of an end of a conduit that may be used in a system according to the invention;
Fig. 13 in cross section a part of a conduit and a part of a sealing plug that may be used in a system according to the invention at a certain stage during insertion of the sealing plug in the conduit;
Fig. 14 in cross section a part of a conduit and a part of a sealing plug that may be used in a system according to the invention at a certain stage during insertion of the sealing plug in the conduit;
Fig. 15 in cross section a part of a conduit and a part of a sealing plug that may be used in a system according to the invention at a certain stage during insertion of the sealing plug in the conduit;
Fig. 16 in cross section a part of a conduit and a part of a sealing plug that may be used in a system according to the invention at a certain stage during insertion of the sealing plug in the conduit;
Fig. 17 in cross section a part of a conduit and a part of a sealing plug that may be used in a system according to the invention at a certain stage during insertion of the sealing plug in the conduit;
Fig. 18 in cross section a part of a conduit and a part of a sealing plug that may be used in a system according to the invention at a certain stage during insertion of the sealing plug in the conduit;
Fig. 19 in cross section a part of a conduit and a part of a sealing plug that may be used in a system according to the invention at a certain stage during insertion of the sealing plug in the conduit;
Fig. 20 in cross section a part of a conduit and a part of a sealing plug that may be used in a system according to the invention at a certain stage during insertion of the sealing plug in the conduit;
Fig. 21 in cross section a part of a conduit and a part of a sealing plug that may be used in a system according to the invention at a certain stage during insertion of the sealing plug in the conduit;
Fig. 22a shows schematically a sealing plug as inserted in a conduit realizing annular contact planes between the plug and inner cylindrical wall of the conduit, and
Fig. 22b shows schematically and partly in cross section a sealing plug as inserted in a conduit realizing annular contact planes between the plug and the pipe.

In the drawing like parts have like references.

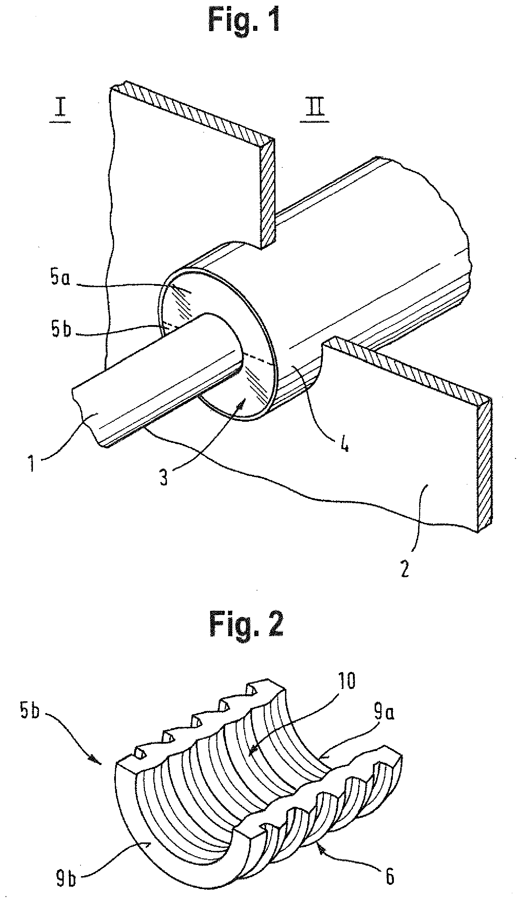

Fig. 1 shows in a perspective view a pipe 1 extending from a compartment I to a compartment II which are separated by a partition 2. Fig. 1 further shows a system for sealing in an opening 3 a space around pipe 1. The system comprises a conduit 4 for sealingly placing in or against the opening 3. In the example of Fig. 1, the opening 3 in partition 2 corresponds to the outer diameter of conduit 4 which is sealingly placed, for instance by welding, in the opening formed in partition 2. The conduit 4 is suitable for ducting pipe 1, as the inner diameter of conduit 4 is larger than the outer diameter of pipe 1. The system further comprises a sealing plug 5, in this example shown as inserted in conduit 4 around the pipe 1. In this example sealing plug 5 has two longitudinal parts 5a, 5b.

Conduit 4 has an inner cylindrical wall defining an inner diameter.

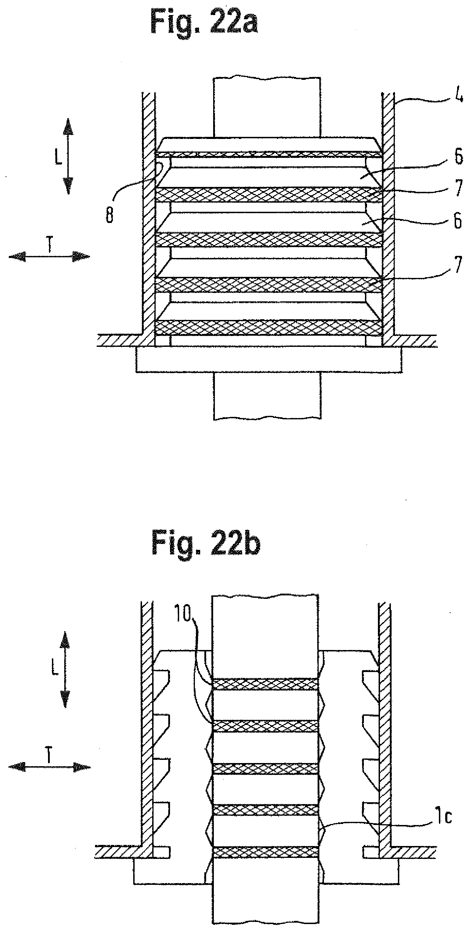

Fig. 2 shows in a perspective view an example of one longitudinal segment of sealing plug 5. The sealing plug 5 is provided with a number of outer ribs 6 spaced apart in an insertion direction of the plug 5 for realizing, in inserted condition, annular contact planes 7 between the plug 5 and the inner cylindrical wall 8 of the conduit 4. The annular contact planes 7 will be described in more detail below, particularly with reference to Fig. 22a.

Each longitudinal segmental part 5a, 5b of sealing plug 5 has a leading plug-end 9a and a trailing plug-end 9b.

As will be discussed later on, sealing plug 5 is preferably also provided with a number of inner ribs spaced apart in an insertion direction (L) of the plug 5 for realizing, in inserted condition, annular contact planes 11 between plug 5 and an outer wall 1a of pipe 1 (reference is made to Fig. 22b).

Longitudinal segmental part 5b of sealing plug 5 as shown in Fig. 2 is at the trailing plug-end 9b flangeless. Such an embodiment of sealing plug 5 is particularly useful for applications in which sealing plug 5 is meant to respond dynamically to a sudden increase of the pressure applied on trailing plug-end 9b. For further details of such an application and of such a sealing plug, reference is made to WO 2008/023058 A1.

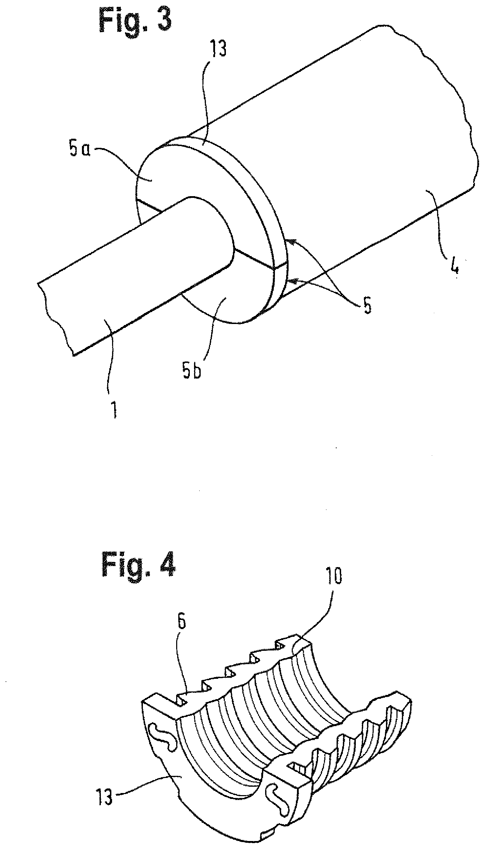

In an embodiment of a system according to the invention, sealing plug 5 may alternatively be provided with a flange 13 at the trailing plug-end 9b. Fig. 3 shows a system comprising such a plug 5. In the embodiment shown in fig. 3, conduit 4 forms the opening through which pipe 1 extends. As can equally be conceived on the basis of Fig. 3, conduit 4 may also be a larger pipe to which pipe 1 having an outer diameter smaller than the inner diameter 8 of conduit 4, is coupled.

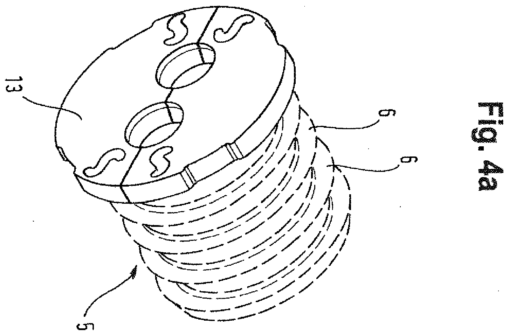

The plug of which one longitudinal segmental part is shown in Fig. 4, is described in more detail in WO 2007/028443 A1.

Although for the sake of clarity the system is described for sealing in an opening a space around a single pipe, the system according to the invention is not limited to sealing in an opening a space formed when only a single pipe extends through the opening. The system can easily be provided such that a space formed by two pipes extending through an opening or formed by more pipes extending through an opening, can be sealed.

Fig. 4a provides an example of a sealing plug suitable for such a "two pipe" system. Reference is also made to WO 2007/028443 Figs. 4a-4e for situations in which more pipes extend through the opening.

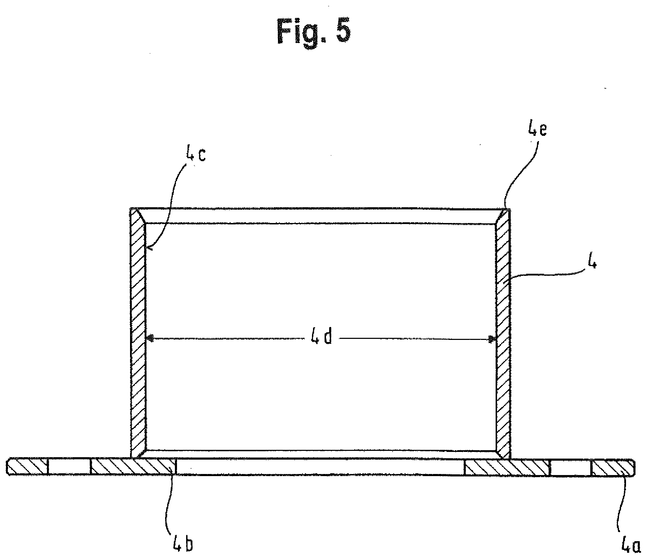

Fig. 5, Fig. 6 and Fig. 7 each show an example of a conduit suitable for an embodiment of a system according to the invention. Fig. 5 shows in cross section a conduit 4 provided with a conduit-flange 4a for bolting the conduit 4 against a partition in which a corresponding opening is provided. The conduit is also provided with a blocking element 4b for hindering movement of a sealing plug further in insertion direction, therewith facilitating a dynamic response of a sealing plug of which a part is as shown in more detail in Fig. 2 of the present application.

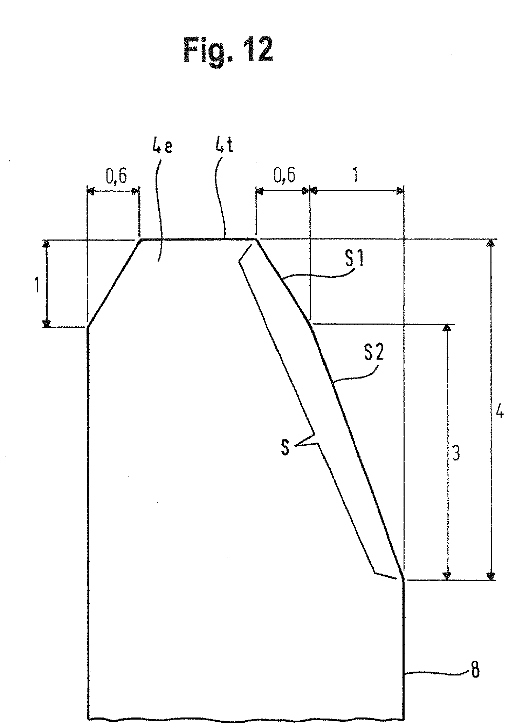

Conduit 4 has an inner cylindrical wall 4c defining an inner diameter 4d. The conduit 4 has an end 4e for insertion of the sealing plug 5. Further details of that end 4e are discussed further below, particularly in relation to Fig. 12.

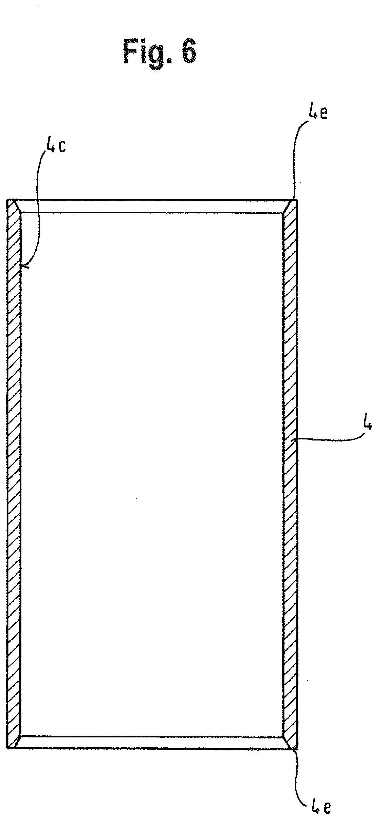

Fig. 6 provides a conduit 4 in the shape of a pipe having two ends 4e for insertion of a sealing plug. This conduit is particularly useful in combination with a sealing plug which has a longitudinal segmental part as shown in Fig. 4.

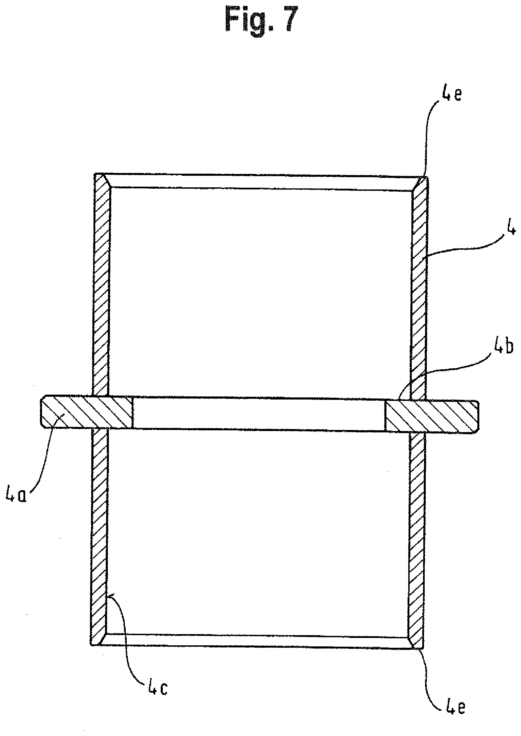

Fig. 7 shows another example of a conduit 4 that can be used in an embodiment of a system according to the invention. Both ends 4e are suitable for insertion of a sealing plug 5. The conduit 4 is also provided with a blocking element 4b as well as a flange 4a which in this embodiment is suitable for welding against a rim of a corresponding opening in a partition.

Further details of conduits usable as part of embodiments of a system according to the invention will be discussed further below.

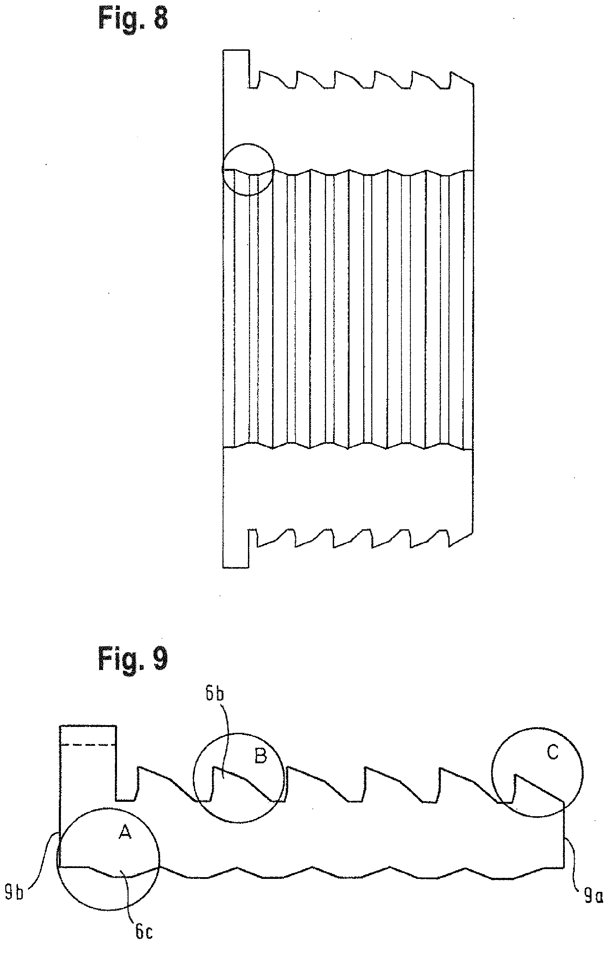

The invention will further be explained with reference to more detailed examples of a sealing plug 5. Fig. 8 shows schematically a more detailed view of a part of a longitudinal segmental part of a sealing plug that may be used in a system according to the invention. Although this sealing plug is shown to have a flange 13, the details and the explanation equally apply to a flangeless sealing plug 5. Sealing plug 5 as displayed by Fig. 8 is intended and designed for a conduit having an inner diameter of 150 mm. Thus, in uninserted condition of the plug 5 each rib 6 extends up to an outer diameter beyond a nominal plug diameter which corresponds to the inner diameter of the conduit 4 for which the sealing plug 5 is designed.

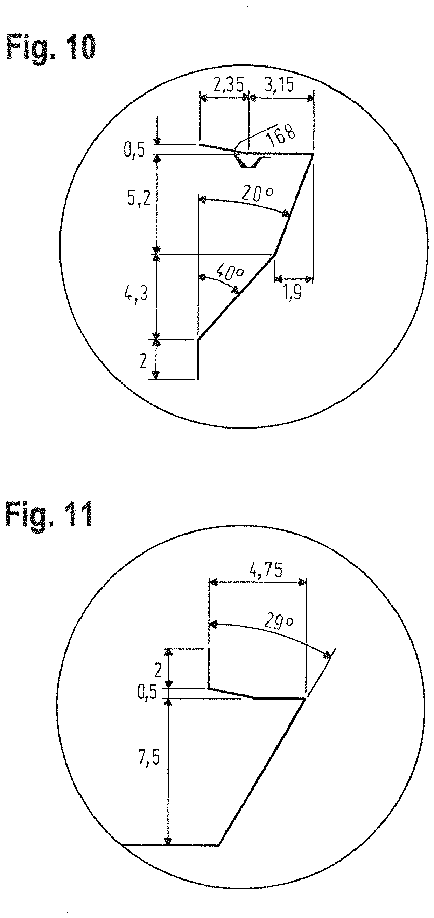

Fig. 9 provides more detail of the outer ribs 6. Two types of ribs of the example displayed in Fig. 9 play an important role during insertion of the plug in the conduit 4. Fig. 10 provides an example of dimensions of rib 6B which is a rib 6 encircled by a circle B in Fig. 9. Fig. 11 provides an example of dimensions of rib 6C which is a rib 6 encircled by circle C in Fig. 9.

Fig. 12 provides a cross section of an end 4e of a conduit 4 usable in an embodiment according to the invention. The end 4e is provided with a slanted section S for facilitating insertion of the sealing plug 5. Rib 6 which is encircled by circle C in Fig. 9, further referred to as rib 6c is a run-in outer rib for insertion thereof before any of the other ribs 6B is inserted. The run-in outer rib 6c is more easily insertable than any of the other outer ribs 6B.

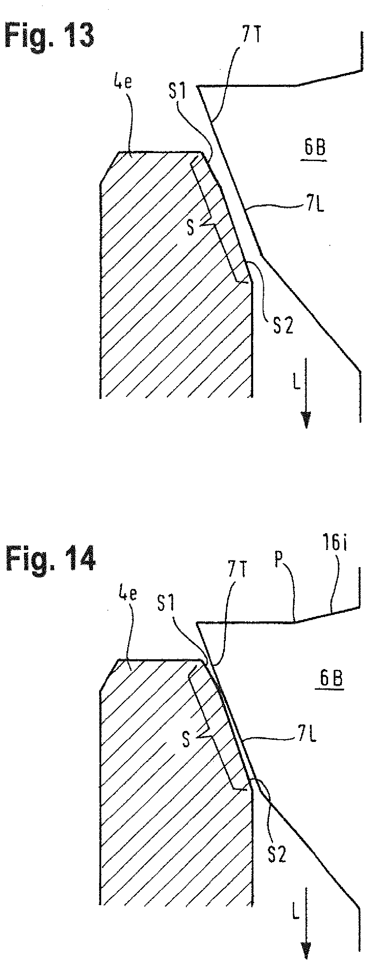

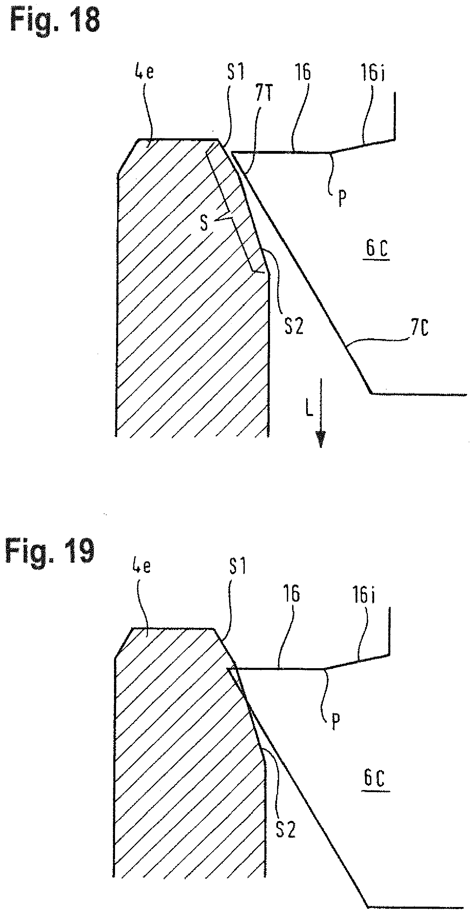

Attention is now drawn to Figs. 13 and 14 for insertion of outer rib 6B and to Fig. 18 for insertion of run-in outer rib 6C. Each of the figures shows the position of the respective rib 6B, 6C at an early stage of insertion of that rib in the end 4e of the conduit 4. The slanted section S and each rib are such that during movement of the sealing plug in insertion direction L, for each rib in undeformed condition of the plug, contact is first established between the slanted section and a trailing end 7T of the contact length of the respective annular contact surface 7 before contact is also established between the slanted section S and a leading end 7L of the contact length. In this consideration, a trailing end 7T is a part of the contact length that belongs to a half of that contact length inserted later than a half of that contact length that is inserted earlier. A leading edge 7L is a part of the contact length that belongs to a half of the contact length inserted earlier than a half of that contact length that is inserted later.

Clearly, at an early stage of insertion of a rib 6B, 6C, the rib has already been inserted to a great extent before the insertion experiences any resistance. This also facilitates alignment of the plug in insertion direction L so that the respective outer rib 6B, 6C will be oriented with respect to the slanted section S of the end 4e of conduit 4 in a way as anticipated. Thus, optimal use is made of the intended orientations of the annular contact surfaces and the slanted section S.

First, the insertion of outer rib 6B will be discussed in more detail. The situation will initially be as shown in Fig. 13. Shortly after that, the situation will be as shown in Fig. 14. Notably, about 80% of the rib (taking into account the insertion direction) is already within the conduit before any substantial contact arises between the rib and the end of conduit 4.

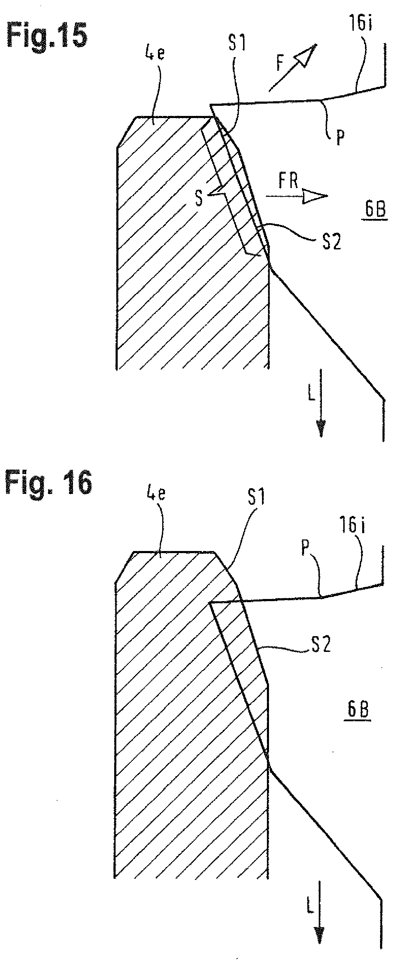

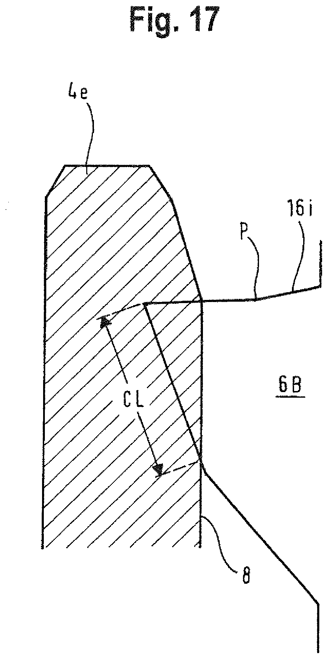

Fig. 14 shows the initial point of contact between rib 6B and the end 4e of conduit 4 when the rib moves further down in insertion direction. Fig. 15 shows schematically where rib 6B would in undeformed condition be on an insertion slightly further than shown in Fig. 14, in relation to the position of end 4e of conduit 4. From Fig. 15 one can easily derive that the slanted section S extends over a length such that during insertion contact is established between the slanted section S and at least a predominant end of the contact length of the respective annular contact surface. For the embodiment shown in Fig. 15, the predominant length amounts to about 80% of the contact length of the respective annular contact surface (a predominant length being more than 50% of the contact length of the respective annular contact surface). For an assessment of the annular contact surface, reference is made to a discussion below in relation to Fig. 17.

In Figs. 15 to 17, as well as in Figs. 19-21, the rib 6B, 6C is shown in undeformed condition and the outer profile of the rib 6B, 6C is seen to overlap with the inner profile of the end 4e of the conduit 4. Of course in reality, this overlap will not be possible. From these figures though, one can derive the response of the respective rib 6B, 6C of the sealing plug 5 to the reactive force exerted by the slanted section S of the end 4e of the conduit 4 during insertion of the plug into the end 4e of the conduit 4.

For instance, from Fig. 15 it is clear that rib 6b will be flexed and pushed radially inwardly so that the annular contact surface of the outer rib 6b can abut against the slanted section S of the end 4e of the conduit 4. Such a flexing may occur more or less in the direction of arrow F. Such flexing may clearly not be enough to facilitate reaching an outer diameter of the rib as small as the inner diameter of the conduit 4. The conduit 4, and initially the slanted section S thereof is likely to also exert a reactive force purely directed radially inwardly. Arrow FR intends to schematically indicate such a force.

Turning back to Figs. 13-15, one can derive that, preferably, the outer diameter of the ribs 6B is slightly larger than the diameter defined by the most outer part of the slanted section S. Thus the slanted section S is only as long as needed, so that the overall length of the conduit 4 can be as short as possible.

As can be seen in more detail from Fig. 12, the slanted section S consists of a first slanted section SI having the shape of a truncated cone and a second slanted section S2 having the shape of a truncated cone. Each cone has an imaginary axis that coincides with the imaginary axis of the conduit 4. The first slanted section SI is closer to a top section 4t than the second slanted section S2. The angle included by the first slanted section and the imaginary axis is larger than the angle included in the second slanted section and the imaginary axis. The first slanted section SI extends over a quarter or less of the total length of the first and second slanted section SI, S2.

As can be seen from Fig. 14, this facilitates a flexing of the trailing end TT of the contact length of the respective annular contact surface of rib 6B. This can occur without any further interaction between the slanted section S and other parts of the annular contact surface. Clearly, at some stage only one point of contact arises between the slanted section S and the annular contact surface. As soon as the flexing starts taking place the outer rib 6B adopts a smaller outer diameter. The further insertion of the outer rib 6B coincides with a further squeezing of the outer rib 6B radially inwardly.

From Fig. 15, and even more clearly from Fig. 16, one can easily imagine that the insertion coincides with a flexing as well as with a pushing radially inwardly of the flexed part of the outer rib.

From Fig. 17 it is clear which part of the annular contact surface will give rise to an annular contact plane of contact between the inner cylindrical wall of conduit 4 and the outer rib 6b. Also the actual contact length of the annular contact surface can easily be derived from Fig. 17 by taking, as shown, the length of the annular contact surface that overlaps with the cross section of the conduit 4.

It should be borne in mind that the actual contact length depends on the exact dimensions of the conduit inner diameter and the exact dimensions of the respective rib. Tolerances in each of these may lead to a slightly different contact length CL. Hence, the contact length CL is best assessed in use. However, normally one cannot see and thus not measure the actual length of the annular contact plane. The derivation in accordance with Fig. 17 works however suitably for the purpose of this description of the invention.

Having now a rough idea about the definition and the actual length of the contact length of the annular contact surface, one can easily derive from Fig. 9 that a plug-free distance is present between each pair of annular contact surfaces and that the plug-free distance is longer than the contact length CL. Preferably, the plug-free distance is at the radial position of the annular contact surfaces, larger than the contact length CL.

Attention is now drawn to Fig. 18, indicating the relative orientations of the run-in outer rib 6C with respect to the slanted section S of the end 4 of conduit 4. Before going into detail, it is to be noted that, as is also clear from Fig. 9 and a comparison between Fig. 10 and Fig. 11, the run-in outer rib 6c has an outer diameter which is smaller than the outer diameter of the other rib 6B. Furthermore, as more clearly visible in Fig. 18, the outer diameter of the run-in rib 6C is smaller than the outer diameter of the first slanted section S1.

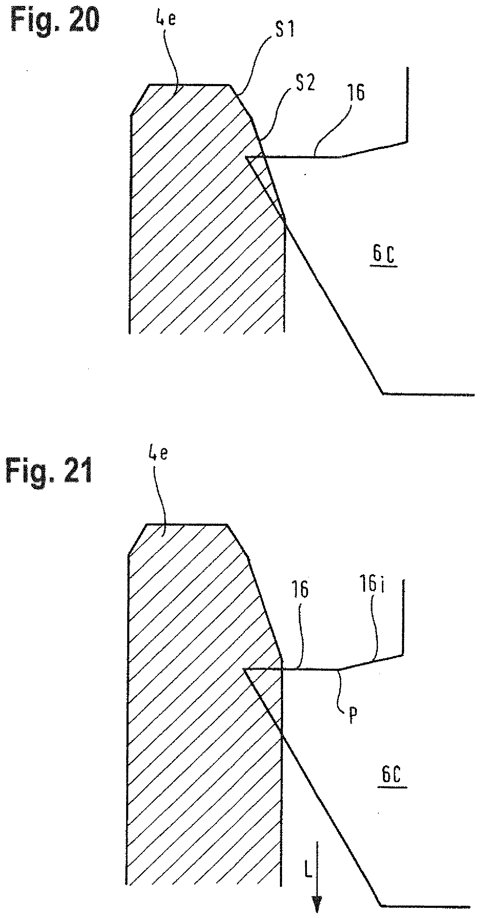

As a consequence of that, the first part of the insertion of the run-in rib 6C will be virtually effortless, given that no interaction between the run-in rib 6C and the very end of the conduit 4e takes place. The contact surface of the run-in rib 6C includes in an uninserted condition an angle with an imaginary axis of the sealing plug which is larger than the angle included by a predominant part of the slanted section, if not the entire part of the slanted section, and an imaginary axis of the conduit 4. More specifically, the annular contact surface of the run-in rib 6C includes in uninserted condition an angle with an imaginary axis of the sealing plug 5 which is larger than the angle included by the second slanted section S2 and an imaginary axis of the conduit 4. Advantageously, as can be derived from Fig. 18 and 19, the run-in rib is such that during movement of the sealing plug in insertion direction L, contact is first established between the slanted section and a trailing end 17 of the contact length of the respective annular contact surface before contact is also established between the slanted section and a leading edge 7L of the contact length CL. For an indication of the contact length CL, reference is made to Fig. 21, in which in analogy to the assessment provided in Fig. 17 is presented how the contact length CL can be assessed for the run-in rib 6C.

On the basis of a comparison of Fig. 18 and 19 it becomes clear that also for the run-in rib an initial flexing of the rib is to be expected. Further, also for the run-in rib 6C it is anticipated that the flex part will be subjected to a radially inward force so that the flex part will flex further up to a point that the outer diameter of the run-in rib will coincide with the inner diameter of conduit 4. Particularly, a comparison of the Figs. 19, 20 and 21 easily allows for deriving such a view.

Fig. 22a aims to indicate the annular contact planes and the contact lengths as formed after complete insertion of the plug 5. The contact length of the run-in rib 6C is much smaller than the contact length of any of the other ribs 6B. This also follows from a comparison of Fig. 17 and 21.

For the sake of completeness, Fig. 22b aims to indicate that annular contact planes are also formed between the plug and the pipe after insertion. The inner profile of the plug 5 is designed such that the plug has sufficient stiffness which is advantageous during insertion. Furthermore, not much deformation of inner ribs is needed so that a contribution of the inner profile to the resistance experienced by insertion of the plug is minimal.

Where in the drawings lengths are given by a numerical value, this numerical value is to be taken as representing the number of millimeters over which that length extends in the direction as shown. Although plug 5 may have different dimensions in terms of the inner and outer diameter, the actual inner profile formed by the inner ribs and the outer profile formed by the outer ribs may be the same for each plug, i.e. independent of the diameters. This equally applied to conduit 4. Although the inner diameter may vary from conduit to conduit, the actual end of the conduit 4 and the slanted section S for facilitating insertion of the plug may be the same for each conduit. Although only one example of outer rib 6B, 6C is shown, modifications of this rib are conceivable and possible. Instead of straight surfaces, these may equally be slightly curved. In general, each rib preferably has in undeformed condition the shape of a sawtooth oriented suitably for insertion of the plug. The annular contact surface includes in an uninserted condition an angle with an imaginary axis of the plug 5 which is smaller than the angle included by a surface of the sawtooth that will not form a contact plane in inserted condition. That surface will be referred to as a free surface 16.

Free surface 16 may comprise at least two parts. Orientation of these parts may be different. As shown, an outer part of free surface 16 may be oriented in a transverse direction T, i.e. transverse to an imaginary axis of sealing plug 5. An inner part 16i may include a slight angle with the transverse direction T. However, this may also be the other way around. It may equally be that each part, that is the inner part 16i and the outer part 16o include a small angle with direction T. To facilitate the flexing of the respective rib 6B, 6C during insertion, free surface 16 is preferably provided with a pivotal point P.

The end of the conduit 4 can equally have slightly different dimensions than shown in Fig. 12. The axial radial thickness of the conduit wall is of no concern at all. However, if the conduit wall is relatively small, then it may be recommendable to also provide a slanted section, or perhaps a rounded-off section at the outer side of the end of conduit 4 so that no relatively sharp angles are present and the plug segments cannot accidentally be damaged when forcefully moved against and/or along the outer edge of the end 4e of the conduit 4.

In the embodiment shown in Fig. 12, the first slanted section S1 extends in axial direction over 1 mm and in a radial direction over 0.6 mm. The second slanted section S2 extends in axial direction over 3 mm and in radial direction over 1 mm. The outer diameter of slanted section S1 coincides with the very ends of conduit 4, and in this example needs a top section 14 that is oriented in a transverse direction T.

A most inner diameter of second slanted section S2 coincides with the inner diameter of the inner cylindrical wall 8 of conduit 4. In this example, slanted section S only comprises the first slanted section S and the second slanted section S. Although this is considered to be optimal from a manufacturing perspective, it is not inconceivable that a transition between the first slanted section S1 and the second slanted section S2 comprises one or more small slanted sections.

Thus, whilst a preferred example has been described in detail, the invention is by no means to that example. Modifications and alterations are possible. Each of the embodiments as described and as modified and altered within independent claim 1 is considered to be an embodiment of the invention.

As to manufacturing details, the plugs can be injection-molded. That is, vulcanizable silicon with suitable additives can be injected into a mold and then vulcanized in that mold; a manufacturing process widely known.

The conduit is ideally made of a stiff material, preferably steel or aluminum. Ideally, the inner surface including the slanted section S is made smooth, for instance by polishing or by providing a smooth coating.

To further facilitate insertion of a sealing plug in the conduit, it is recommended to provide a lubricant on the outer edges of the sealing plug and the inner parts of the conduit.

## Claims

1. System for sealing in an opening space around a pipe (1), wherein the system comprises: a conduit (4) for forming the opening (3) or for sealingly placing in or against the opening (3), and for ducting the pipe (1); and a sealing plug (5) for insertion in the conduit (4) around the pipe (1), the conduit (4) having an inner cylindrical wall (4c) defining an inner diameter (4d), the sealing plug (5) being provided with a number of outer ribs (6) spaced apart in an insertion direction of the plug (5) for realizing, in inserted condition, annular contact planes (7) between the plug (5)and the inner cylindrical wall (4c) of the conduit (4), wherein in uninserted condition of the plug (5) each rib (6) extends up to an outer diameter beyond a nominal plug (5) diameter, wherein the nominal plug (5) diameter corresponds to the inner diameter (4d) of the conduit (4) for which the plug (5) is designed, each rib (6) having an annular contact surface with a contact length (CL) for providing in inserted condition a sealing length in insertion direction (L) of the respective annular contact plane, the conduit (4) further having at least one end for insertion of the sealing plug (5), wherein that at least one end (4e) is provided with a slanted section for facilitating insertion of the plug (5), the slanted section and each rib (6) being such that during movement of the sealing plug (5) in insertion direction (L), for each rib (6) in undeformed condition of the plug (5) contact is first established between the slanted section (S)and a trailing end (TT) of the contact length (CL) of the respective annular contact surface before contact is also established between the slanted section (S) and a leading end (7L) of the contact length (CL), **Characterized in that** the slanted section (S) consists of a first slanted section (S1) having the shape of a truncated cone and a second slanted section (S2) having the shape of a truncated cone, each cone having an imaginary axis that coincides with the imaginary axis of the conduit (4), the first slanted section (S1) being closer to the top section than the second slanted section (S2), the angle included by the first slanted section (S1) and the imaginary axis being larger than the angle included by the second slanted section (S2) and the imaginary axis.

2. System according to claim 1, wherein the slanted section (S) extends over a length such that during insertion contact is established between the slanted section (S) and at least a predominant length of the contact length (CL) of the respective annular contact surface.

3. System according to claim 1 or 2, wherein the contact length (CL) of each annular contact surface is such that at stages during insertion of the plug (5) the annular contact surface of one of the ribs (6) is partly outside the conduit (4) and partly in contact with the inner cylindrical wall (4c) .

4. System according to claim 1, 2 or 3, wherein a plug-free distance is present between each pair of annular contact surfaces, the plug-free distance at the radial position of the annular contact surfaces being longer than the contact length(CL).

5. System according to claim 4, wherein the plug-free distance at the radial position of the annular contact surfaces is about twice the contact length(CL).

6. System according to any one of claims 1-5, wherein the outer diameter of a number of the ribs is slightly larger than the diameter defined by the most outer part of the slanted section (S).

7. System according to any one of the previous claims, wherein one of the ribs (6) is a run-in outer rib (6c) for insertion thereof before any of the other ribs (6B) is inserted, the run-in outer rib (6c) being more easily insertable than any of the other outer ribs (6B).

8. System according to claim 7, wherein the run-in outer rib (6c) has an outer diameter which is smaller than the outer diameter of the other ribs (6B).

9. System according to claim 6, 7 or 8, wherein the outer diameter of the run-in rib (6c) is smaller than the outer diameter of the first slanted section (S1)).

10. System according to any one of the previous claims, wherein each annular contact surface includes in uninserted condition an angle with an imaginary axis of the sealing plug (5) which is larger than the angle included by a predominant part of the slanted section (S) and an imaginary axis of the conduit (4).

11. System according to claim 10, wherein each annular contact surface includes in uninserted condition an angle with an imaginary axis of the sealing plug (5) which is larger than the angle included by the second slanted section (S2) and an imaginary axis of the conduit (4).

12. System according to any one of claims 7-11, wherein the contact surface of the run-in rib (6c) includes in uninserted condition an angle with an imaginary axis of the sealing plug (5) which is larger than the angle included by a predominant part of the slanted section (s) and an imaginary axis of the conduit (4).

13. System according to claim 12, wherein the annular contact surface of the run-in rib (6c) includes in uninserted condition an angle with an imaginary axis of the sealing plug (5) which is larger than the angle included by the second slanted section (S2) and an imaginary axis of the conduit (4).

## Patentansprüche

1. System zum Abdichten in einem Öffnungsraum um ein Rohr (1), wobei das System Folgendes umfasst: eine Leitung (4) zum Bilden der Öffnung (3) oder zum abdichtenden Anbringen in oder an der Öffnung (3) und zum Führen des Rohres (1); und einen Abdichtungsstopfen (5) zum Einsetzen in die Leitung (4) um das Rohr (1) herum, wobei die Leitung (4) eine innere zylindrische Wand (4c) aufweist, die einen Innendurchmesser (4d) definiert, wobei der Abdichtungsstopfen (5) mit einer Anzahl von äußeren Rippen (6) versehen ist, die in einer Einsetzrichtung des Stopfens (5) beabstandet sind, um im eingesetzten Zustand ringförmige Kontaktebenen (7) zwischen dem Stopfen (5) und der inneren zylindrischen Wand (4c) der Leitung (4) zu realisieren, wobei sich im nicht eingesetzten Zustand des Stopfens (5) jede Rippe (6) bis zu einem Außendurchmesser über einen Nenndurchmesser des Stopfens (5) hinaus erstreckt, wobei der Nenndurchmesser des Stopfens (5) dem Innendurchmesser (4d) der Leitung (4) entspricht, für die der Stopfen (5) ausgelegt ist, wobei jede Rippe (6) eine ringförmige Kontaktoberfläche mit einer Kontaktlänge (CL) aufweist, um im eingesetzten Zustand eine Dichtungslänge in Einsetzrichtung (L) der jeweiligen ringförmigen Kontaktebene bereitzustellen, wobei die Leitung (4) weiter mindestens ein Ende zum Einsetzen des Abdichtungsstopfens (5) aufweist, wobei dieses mindestens eine Ende (4e) mit einem abgeschrägten Bereich versehen ist, um das Einsetzen des Stopfen (5) zu erleichtern, wobei der abgeschrägte Bereich und jede Rippe (6) so beschaffen sind, dass während der Bewegung des Abdichtungsstopfens (5) in Einsetzrichtung (L) für jede Rippe (6) im unverformten Zustand des Stopfens (5) zunächst ein Kontakt zwischen dem abgeschrägten Bereich (S) und einem hinteren Ende (TT) der Kontaktlänge (CL) der jeweiligen ringförmigen Kontaktoberfläche aufgebaut wird, bevor auch ein Kontakt zwischen dem abgeschrägten Bereich (S) und einem vorderen Ende (7L) der Kontaktlänge (CL) aufgebaut wird, **dadurch gekennzeichnet, dass** der abgeschrägte Bereich (S) aus einem ersten abgeschrägten Bereich (S1), der die Form eines verkürzten Kegels aufweist, und einem zweiten abgeschrägten Bereich (S2), der die Form eines verkürzten Kegels aufweist, besteht, wobei jeder Kegel eine imaginäre Achse aufweist, die mit der imaginären Achse der Leitung (4) übereinstimmt, wobei der erste abgeschrägte Bereich (S1) näher an dem oberen Bereich liegt als der zweite abgeschrägte Bereich (S2), wobei der von dem ersten abgeschrägten Bereich (S1) und der imaginären Achse eingeschlossene Winkel größer ist als der von dem zweiten abgeschrägten Bereich (S2) und der imaginären Achse eingeschlossene Winkel.

2. System nach Anspruch 1, wobei sich der abgeschrägte Bereich (S) über eine Länge erstreckt, sodass beim Einsetzen ein Kontakt zwischen dem abgeschrägten Bereich (S) und mindestens einer überwiegenden Länge der Kontaktlänge (CL) der jeweiligen ringförmigen Kontaktoberfläche aufgebaut wird.

3. System nach Anspruch 1 oder 2, wobei die Kontaktlänge (CL) jeder ringförmigen Kontaktfläche so beschaffen ist, dass in den Phasen des Einsetzens des Stopfens (5) die ringförmige Kontaktoberfläche einer der Rippen (6) teilweise außerhalb der Leitung (4) und teilweise in Kontakt mit der inneren zylindrischen Wand (4c) ist.

4. System nach Anspruch 1, 2 oder 3, wobei zwischen jedem Paar ringförmiger Kontaktoberflächen ein stopfenfreier Abstand vorhanden ist, wobei der stopfenfreie Abstand an der radialen Position der ringförmigen Kontaktoberflächen länger ist als die Kontaktlänge (CL).

5. System nach Anspruch 4, wobei der stopfenfreie Abstand an der radialen Position der ringförmigen Kontaktoberflächen etwa das Doppelte der Kontaktlänge (CL) beträgt.

6. System nach einem der Ansprüche 1-5, wobei der Außendurchmesser einer Anzahl von Rippen geringfügig größer ist als der Durchmesser, der durch den äußersten Teil des abgeschrägten Bereichs (S) definiert wird.

7. System nach einem der vorstehenden Ansprüche, wobei eine der Rippen (6) eine eingezogene äußere Rippe (6c) ist, die vor dem Einsetzen einer der anderen Rippen (6B) eingesetzt wird, wobei die eingezogene äußere Rippe (6c) leichter einsetzbar ist als jede der anderen äußeren Rippen (6B).

8. System nach Anspruch 7, wobei die eingezogene äußere Rippe (6c) einen Außendurchmesser aufweist, der kleiner ist als der Außendurchmesser der anderen Rippen (6B).

9. System nach Anspruch 6, 7 oder 8, wobei der Außendurchmesser der eingezogenen Rippe (6c) kleiner ist als der Außendurchmesser des ersten abgeschrägten Bereichs (S1).

10. System nach einem der vorstehenden Ansprüche, wobei jede ringförmige Kontaktoberfläche im nicht eingesetzten Zustand einen Winkel mit einer imaginären Achse des Abdichtungsstopfens (5) einschließt, der größer ist als der Winkel, der von einem überwiegenden Teil des abgeschrägten Bereichs (S) und einer imaginären Achse der Leitung (4) eingeschlossen wird.

11. System nach Anspruch 10, wobei jede ringförmige Kontaktoberfläche im nicht eingesetzten Zustand einen Winkel mit einer imaginären Achse des Abdichtungsstopfens (5) einschließt, der größer ist als der Winkel, der von dem zweiten abgeschrägten Bereich (S2) und einer imaginären Achse der Leitung (4) eingeschlossen wird.

12. System nach einem der Ansprüche 7-11, wobei die Kontaktoberfläche der eingezogenen Rippe (6c) im nicht eingesetzten Zustand einen Winkel mit einer imaginären Achse des Abdichtungsstopfens (5) einschließt, der größer ist als der Winkel, der von einem überwiegenden Teil des abgeschrägten Bereichs (s) und einer imaginären Achse der Leitung (4) eingeschlossen wird.

13. System nach Anspruch 12, wobei die ringförmige Kontaktoberfläche der eingezogenen Rippe (6c) im nicht eingesetzten Zustand einen Winkel mit einer imaginären Achse des Abdichtungsstopfens (5) einschließt, der größer ist als der Winkel, der von dem zweiten abgeschrägten Bereich (S2) und einer imaginären Achse der Leitung (4) eingeschlossen wird.

## Revendications

1. Système pour étanchéifier dans une ouverture un espace autour d'un tuyau (1), dans lequel le système comprend : un conduit (4) pour former l'ouverture (3) ou pour être placé de manière étanche dans ou contre l'ouverture (3), et pour gainer le tuyau (1) ; et un bouchon (5) d'étanchéité pour une insertion dans le conduit (4) autour du tuyau (1), le conduit (4) présentant une paroi cylindrique intérieure (4c) définissant un diamètre intérieur (4d), le bouchon (5) d'étanchéité étant pourvu d'un certain nombre de nervures (6) extérieures espacées dans une direction d'insertion du bouchon (5) pour réaliser, dans un état inséré, des plans de contact annulaires (7) entre le bouchon (5) et la paroi cylindrique intérieure (4c) du conduit (4), dans lequel dans un état non inséré du bouchon (5) chaque nervure (6) s'étend jusqu'à un diamètre extérieur au-delà d'un diamètre de bouchon (5) nominal, dans lequel le diamètre de bouchon (5) nominal correspond au diamètre intérieur (4d) du conduit (4) pour lequel le bouchon (5) est conçu, chaque nervure (6) présentant une surface de contact annulaire avec une longueur de contact (CL) pour fournir dans un état inséré une longueur d'étanchéité dans une direction d'insertion (L) du plan de contact annulaire respectif, le conduit (4) présentant en outre au moins une extrémité pour une insertion du bouchon (5) d'étanchéité, dans lequel cette au moins une extrémité (4e) est pourvue d'une section inclinée pour faciliter une insertion du bouchon (5), la section inclinée et chaque nervure (6) étant telles que durant un déplacement du bouchon (5) d'étanchéité dans une direction d'insertion (L), pour chaque nervure (6) dans un état non déformé du bouchon (5) un contact est tout d'abord établi entre la section inclinée (S) et une extrémité arrière (TT) de la longueur de contact (CL) de la surface de contact annulaire respective avant qu'un contact ne soit également établi entre la section inclinée (S) et une extrémité avant (7L) de la longueur de contact (CL), **caractérisé en ce que** la section inclinée (S) consiste en une première section inclinée (S1) présentant la forme d'un cône tronqué et une seconde section inclinée (S2) présentant la forme d'un cône tronqué, chaque cône présentant un axe imaginaire qui coïncide avec l'axe imaginaire du conduit (4), la première section inclinée (S1) étant plus proche de la section supérieure que la seconde section inclinée (S2), l'angle inclus par la première section inclinée (S1) et l'axe imaginaire étant plus grand que l'angle inclus par la seconde section inclinée (S2) et l'axe imaginaire.

2. Système selon la revendication 1, dans lequel la section inclinée (S) s'étend sur une longueur de telle sorte que durant une insertion un contact soit établi entre la section inclinée (S) et au moins une longueur prédominante de la longueur de contact (CL) de la surface de contact annulaire respective.

3. Système selon la revendication 1 ou 2, dans lequel la longueur de contact (CL) de chaque surface de contact annulaire est telle qu'à des étapes durant une insertion du bouchon (5) la surface de contact annulaire d'une des nervures (6) est en partie à l'extérieur du conduit (4) et en partie en contact avec la paroi cylindrique intérieure (4c)

4. Système selon la revendication 1, 2 ou 3, dans lequel une distance sans bouchon est présente entre chaque paire de surfaces de contact annulaires, la distance sans bouchon au niveau de la position radiale des surfaces de contact annulaires étant plus longue que la longueur de contact (CL).

5. Système selon l'une quelconque revendication 4, dans lequel la distance sans bouchon au niveau de la position radiale des surfaces de contact annulaires est d'environ deux fois la longueur de contact (CL).

6. Système selon l'une quelconque des revendications 1-5, dans lequel le diamètre extérieur d'un certain nombre des nervures est légèrement plus grand que le diamètre défini par la partie la plus extérieure de la section inclinée (S).

7. Système selon l'une quelconque des revendications précédentes, dans lequel une des nervures (6) est une nervure de rodage (6c) extérieure pour une insertion de celle-ci avant que l'une quelconque des autres nervures (6B) ne soit insérée, la nervure de rodage (6c) extérieure pouvant être insérée plus facilement que l'une quelconque des autres nervures (6B) extérieures.

8. Système selon la revendication 7, dans lequel la nervure de rodage (6c) extérieure présente un diamètre extérieur qui est plus petit que le diamètre extérieur des autres nervures (6B).

9. Système selon la revendication 6, 7 ou 8, dans lequel le diamètre extérieur de la nervure de rodage (6c) est plus petit que le diamètre extérieur de la première section inclinée (S1).

10. Système selon l'une quelconque des revendications précédentes, dans lequel chaque surface de contact annulaire inclut dans un état non inséré un angle avec un axe imaginaire du bouchon (5) d'étanchéité qui est plus grand que l'angle inclus par une partie prédominante de la section inclinée (S) et un axe imaginaire du conduit (4).

11. Système selon la revendication 10, dans lequel chaque surface de contact annulaire inclut dans un état non inséré un angle avec un axe imaginaire du bouchon (5) d'étanchéité qui est plus grand que l'angle inclus par la seconde section inclinée (S2) et un axe imaginaire du conduit (4).

12. Système selon l'une quelconque des revendications 7-11, dans lequel la surface de contact de la nervure de rodage (6c) inclut dans un état non inséré un angle avec un axe imaginaire du bouchon (5) d'étanchéité qui est plus grand que l'angle inclus par une partie prédominante de la section inclinée (s) et un axe imaginaire du conduit (4).

13. Système selon la revendication 12, dans lequel la surface de contact annulaire de la nervure de rodage (6c) inclut dans un état non inséré un angle avec un axe imaginaire du bouchon (5) d'étanchéité qui est plus grand que l'angle inclus par la seconde section inclinée (S2) et un axe imaginaire du conduit (4).
